Europäisches Patentamt

European Patent Office

Office européen des brevets

(19)

(11) Numéro de publication: **0 018 900**
**B1**

(12) **FASCICULE DE BREVET EUROPEEN**

(45) Date de publication du fascicule du brevet: **14.12.83**

(51) Int. Cl.³: **F 24 J 3/02**

(21) Numéro de dépôt: **80400565.0**

(22) Date de dépôt: **25.04.80**

(54) **Panneau émetteur-récepteur d'énergie rayonnée à haut rendement et procédé d'utilisation d'un tel panneau.**

(30) Priorité: **04.05.79 FR 7911310**

(43) Date de publication de la demande:
**12.11.80 Bulletin 80/23**

(45) Mention de la délivrance du brevet:
**14.12.83 Bulletin 83/50**

(84) Etats contractants désignés:
**BE CH DE FR GB IT LI NL SE**

(56) Documents cités:
**FR - A - 2 284 836**
**FR - A - 2 305 697**
**FR - A - 2 388 220**
**GB - A - 956 068**
**GB - A - 1 524 961**
**US - A - 3 266 565**
**US - A - 3 312 268**
**US - A - 3 817 605**
**US - A - 4 079 724**
**US - A - 4 084 575**
**US - A - 4 088 115**

(73) Titulaire: **Devienne, Fernand Marcel**
**117, Boulevard de la Croisette**
**F-06400 Cannes (FR)**

(72) Inventeur: **Devienne, Fernand Marcel**
**117, Boulevard de la Croisette**
**F-06400 Cannes (FR)**

(74) Mandataire: **Mongrédien, André et al,**
**c/o BREVATOME 25, rue de Ponthieu**
**F-75008 Paris (FR)**

(56) Documents cités:
**US - A - 4 088 121**
**US - A - 4 106 479**

**TECHN. RUNDSCHAU, vol. 69, no. 32, août**
**1977 Bern CH R. KRIESI: "Aktive oder passive**
**Solarheizung", pages 9 et 10**

Courier Press, Leamington Spa, England.

Panneau émetteur-récepteur d'énergie rayonnée à haut rendement
et procédé d'utilisation d'un tel panneau.

La présente invention se rapporte aux techniques de captation et de transfert de l'énergie thermique par rayonnement et a pour objet, à cet effet, des panneaux récepteur-émetteur d'énergie rayonnée à haut rendement. On sait que l'énergie thermique se manifeste et se transmet à distance dans l'univers sous la forme d'ondes électromagnétiques. Lorsqu'un rayonnement électromagnétique émis par un corps A rencontre un autre corps B, la matière du corps B absorbe une partie au moins de ce rayonnement et le transforme en chaleur augmentant ainsi la température du corps B; inversement, si le corps B est porté à une certaine température non nulle, il rayonne c'est-à-dire qu'il perd une partie au moins de sa chaleur sous forme d'un rayonnement électromagnétique qu'il émet.

Cette transformation réversible de la chaleur en rayonnement au contact d'un corps matériel absorbant permet le transfert à distance de la chaleur, puisque le rayonnement électromagnétique se transmet dans l'espace à la vitesse de la lumière. La faculté d'échanger ensuite par conduction ou convection la chaleur ainsi acquise par un corps matériel dans un système échangeur où circule un fluide caloporteur rend possible, au moins théoriquement, la captation de l'énergie rayonnée et son utilisation à des fins de récupération industrielle. On sait également que l'énergie émise par unité de surface par un corps porté à la température absolue T est donnée par la formule:

$$W = \sigma E T^4$$

dans laquelle $\sigma$ est la constante de Stefan,

E est l'émissivité, définie comme le rapport du pouvoir d'émission du corps considéré au pouvoir d'émission du corps noir. Cette émissivité E varie de 1 (pour un radiateur du type "corps noir") à 0 (pour un réflecteur parfait) et dépend également de la température. D'une manière générale, les corps qui sont de bons émetteurs (E voisin de 1) sont aussi de bons absorbants de l'énergie rayonnée, le corps noir représentant la limite idéale dans ce domaine.

Si l'on veut par conséquent réaliser de l'échange d'énergie par rayonnement, il faut donc disposer de corps émetteur-absorbeur dont les propriétés se rapprochent le plus possible de celles du corps noir (E aussi voisin de 1 que possible) et qui se présentent sous une forme compatible avec leur fabrication et leur emploi facile dans l'industrie. A cet effet, les corps noirs expérimentaux, consistant le plus souvent en cavités creuses munies d'un orifice ou d'une fente étroite sont inutilisables pratiquement.

Dans l'art antérieur, on a essayé de réaliser, et cela essentiellement pour capter le rayonnement solaire, des panneaux métalliques munis sur leur surface de moyens réflecteurs aptes à piéger le rayonnement. En particulier, on sait que lorsqu'un rayonnement fappe une surface quelconque une partie seulement de l'énergie incidente est absorbée, le reste étant réfléchi. En matière de capteurs solaires, on a cherché à réaliser des surfaces dont les propriétés absorbantes soient aussi proches que possible de celles du corps noir, c'est-à-dire telles que l'energie incidente soit absorbée en totalité. D'une manière classique on revêt les absorbeurs des capteurs solaires connus d'une couche de peinture noire, ou encore d'une couche de peinture sélective absorbant de préférence des radiations de longueur d'onde déterminée. Le rendement d'absorption de tels capteurs est ainsi nettement amélioré. Cependant, de tels procédés ne permettent pas d'éviter qu'une fraction de l'énergie incidente frappant le capteur solaire soit réfléchie. De plus, la couche de peinture dont on revêt ces capteurs solaires constitue une résistance thermique à la conduction de la chaleur qui a pour effet de diminuer le rendement de l'absorbeur.

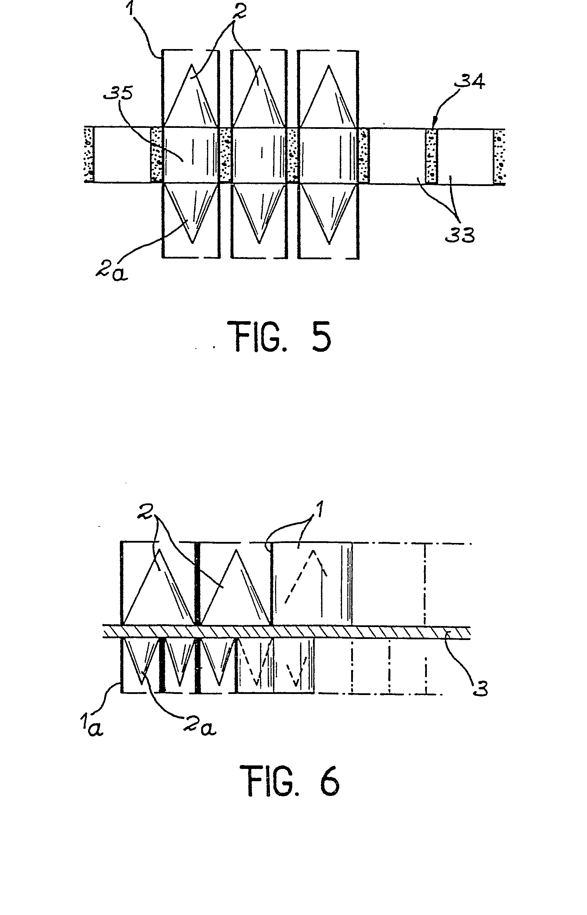

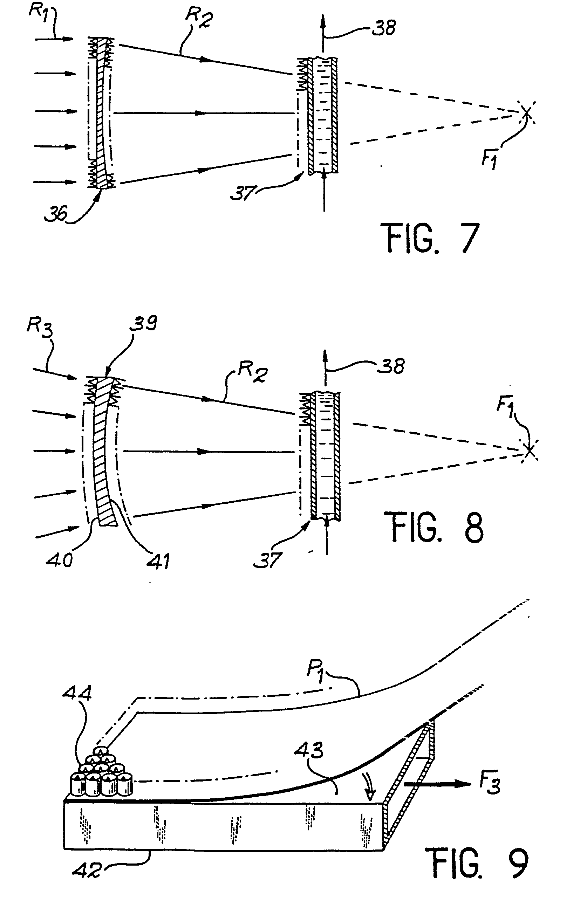

Les panneaux décrits dans les brevets américains 4 079 724 et 4 088 115 ne sont toutefois que moyennement absorbants, et strictement limités dans leur application à la captation de l'énergie solaire qu'il s'agit de convertir en chaleur immédiatement évacuée par un fluide caloporteur. De plus, les dispositifs du brevet américain 4 079 724 (Zwillinger) sont de réalisation fort complexe, car la surface absorbante utilisée comprend à la fois des parties concaves et des parties convexes. Selon le mode de réalisation de la figure 6, ces parties se terminent par une zone en forme de doigts de gants en spirale s'enroulant sur elle-même à la manière d'une coquille d'escargot. Une telle structure est théoriquement destinée à concentrer l'énergie de rayonnement en "l'enfermant" dans les doigts de gants en spirale et à augmenter la température du panneau en l'empêchant de rayonner. Selon le mode de réalisation des figures 8 à 10 une partie à parois concave fait saillie et est entourée par une partie à parois convexe. Or, d'une part, il est illusoire de raisonner ainsi, car, comme on l'a rappelé précédemment, les corps bons absorbeurs du rayonnement sont également de bons émetteurs, et, d'autre part, à supposer que le résultat escompté soit réellement atteint, ceci ne permettrait pas d'utiliser un tel panneau comme récepteur-émetteur pour la transmission à distance de l'énergie rayonnée et, par exemple, le refroidissement d'un foyer à haute température, car il n'est actif que sur une seule face.

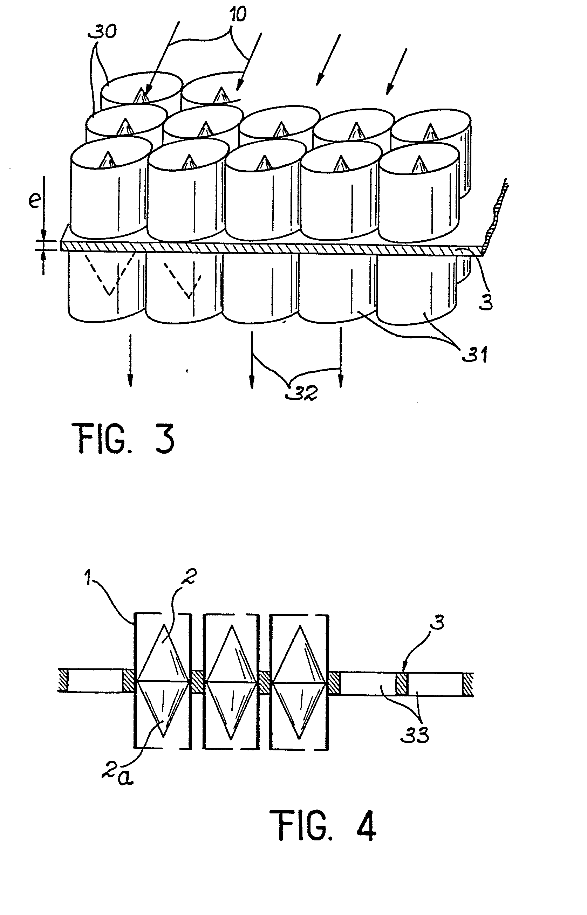

On peut citer enfin le brevet français 2 305 697 qui est relatif à un capteur d'énergie solaire pour chauffer de l'eau. Ce capteur comporte au-dessous d'une vitre 3 une cellule 6 dans laquelle circule l'eau qui est constituée de deux tôles métalliques. Entre la tôle métallique supérieure et la vitre 3 est disposée une zone alvéolaire 4 qui peut être composée notamment de cylindres droits métalliques jointifs, comme représenté en coupe sur la figure 4. Ces alvéoles ont théoriquement pour but d'assurer par réflexion sur les cloisons latérales 14 des cylindres métalliques, l'impact sur la plaque métallique de base des radiations obliques recueillies dans l'atmosphère. Cette structure présente de toute évidence un inconvénient majeur dû au fait que toute une partie du rayonnement solaire situé de part et d'autre de la normale à la plaque inférieure est réfléchie directement vers l'extérieur sans rencontrer les parois latérales 14 des cylindres et donc perdue pour le capteur. Or, il est bien connu que c'est dans la direction verticale que le rayonnement solaire est le plus énergétique. Une telle disposition, tout en améliorant néanmoins légèrement le rendement du capteur reste encore très insuffisante et en tout cas fort loin des conditions d'absorption totale qui sont celles du corps noir théorique.

La présente invention a précisément pour objet un panneau émetteur-récepteur à haut rendement d'énergie rayonnée qui permet à l'aide d'une structure géométrique simple et de réalisation facile d'absorber et de réémettre l'énergie disponible sous forme de rayonnement, soit pour l'échanger directement avec un fluide caloporteur, soit pour la transmettre à distance à d'autres panneaux identiques puis finalement à un fluide caloporteur.

Ce panneau émetteur-récepteur à haut rendement d'énergie rayonnée du genre de ceux qui comprennent de façon connue une plaque métallique support, conductrice de la chaleur, sur une face de laquelle se trouve une surface absorbante composée de tubes métalliques cylindriques droits à base circulaire, d'axes perpendiculaires à la surface de la plaque, disposés selon un réseau régulier, se caractérise en ce que, à l'intérieur de chacun des tubes cylindriques droits se trouve disposé un cône métallique droit ayant pour base l'intersection du tube cylindrique avec la plaque support et pour sommet un point situé à l'intérieur du tube cylindrique droit, sur l'axe de ce tube, le demi-angle au sommet $\theta$ de chaque cône satisfaisant l'expression $h - h' > d/2 \, tg \, \theta$, expression dans laquelle h est la hauteur de chacun des tubes cylindriques droits, h' est la hauteur de chacun des cônes et d le diamètre de chacun des tubes cylindriques droits.

Selon la structure précédemment décrite, la différence entre la hauteur des tubes métalliques cylindriques droits et celle de chacun des cônes métalliques situés à l'intérieur desdits tubes cylindriques métalliques droits est telle qu'un rayon incident frappant à la surface d'un cône est réfléchi contre la paroi interne du tube dans lequel il se trouve.

Cette disposition particulière permet à tout rayonnement électromagnétique incident tombant sur la surface d'y subir un grand nombre de réflexions successives au cours desquelles les photons le constituant abandonnent progressivement une partie de leur énergie.

Selon les différents modes de mise en oeuvre possibles du panneau émetteur-récepteur objet de l'invention, les tubes métalliques cylindriques peuvent être jointifs ou non sur toute la surface de la plaque métallique support. Par ailleurs, celle-ci peut être plane et d'épaisseur constante ou au contraire avoir une épaisseur variable de façon que l'une de ses faces absorbantes au moins ait un profil légèrement convexe ou concave. Dans ce dernier cas, on ajoute à l'effet absorbant ou émetteur proprement de de la surface un effet de concentration optique analogue à celui que l'on obtient avec un miroir. Ceci peut être très utile dans le cas où la chaleur captée initialement est transmise successivement par l'intermédiaire d'un certain nombre de panneaux placés en série jusqu'au fluide caloporteur finalement utilisé pour emporter les calories.

Selon un autre mode de mise en oeuvre de l'invention, les deux faces absorbantes d'une même panneau peuvent être équipées de tubes métalliques cylindriques droits disposés de part et d'autre de la plaque selon des réseaux réguliers de pas différents. Selon une variante intéressante, le diamètre des cylindres équipant chacune des deux faxes de la plaque peut être également différent.

Dans certains modes de mise en oeuvre de l'invention, dans lesquels notamment il s'agit d'extraire de la chaleur au travers de la paroi d'une enceinte fermée, on réalise le panneau émetteur-récepteur à l'aide d'une plaque métallique support qui est percée d'orifices. Selon cette variante, deux modes de réalisation sont possibles.

Dans le premier mode de réalisation, le panneau à double surface absorbante est constitué de tubes cylindriques équipés chacun en son milieu de deux cônes accolés par leur base commune traversant de part en part la plaque support dans les orifices de laquelle ils sont insérés selon un réseau régulier.

Dans le deuxième mode de réalisation, le panneau à double surface absorbante est constitué de tubes cylindriques équipés chacun en son milieu d'une pièce métallique pleine ayant la forme d'un cylindre droit prolongé à ses deux extrémités par deux cônes dont les sommets sont en des directions opposées, lesdits tubes cylindriques traversant de part en part la plaque support dans les orifices de laquelle ils sont insérés selon un réseau régulier.

Les matériaux constitutifs du panneau émetteur-récepteur, objet de l'invention, et notamment la plaque métallique plane, les tubes cylindriques métalliques droits et les cônes métalliques droits sont réalisés en un matériau conducteur de la chaleur tel que par exemple le cuivre, l'aluminium, la laiton et leurs différents alliages. L'acier, l'acier inox et le tantale sont également utilisés à haute température.

Les applications du panneau émetteur-récepteur d'énergie rayonnée selon l'invention, sont très diverses et l'on en citera à titre indicatif quelques unes dans la suite du présente texte.

Le panneau émetteur-récepteur selon l'invention peut se présenter essentiellement sous deux formes différentes, à savoir, une première forme que l'on appellera dans la suite du texte $P_1$ et dans laquelle seule l'une des faces de la plaque métallique support est munie d'une surface absorbante et une deuxième forme, appelée dans la suite du texte $P_2$, dans laquelle la plaque métallique support est équipée sur ses deux faces d'une surface absorbante. Il doit être bien entendu d'ailleurs que lorsque l'on parle dans le présent texte d'une surface absorbante, on sous entend par là même implicitement le fait qu'elle est capable d'être en même temps émettrice conformément aux principes généraux rappelés au début, et que par conséquent les mots "émetteur" et "absorbant" doivent être considérés comme pratiquement interchangeables dans la présente description.

Que le panneau émetteur-récepteur objet de l'invention soit du type $P_1$ ou du type $P_2$, il peut être utilisé essentiellement de deux façons différentes.

Dans un premier mode d'utilisation, le panneau émetteur-récepteur est utilisé seul. Il reçoit sur l'une de ses faces un rayonnement électromagnétique qu'il transforme en chaleur et restitue celle-ci par l'autre de ses faces directement à un fluide caloporteur qui s'écoule au contact direct de ladite face.

Dans un deuxième mode d'utilisation, le panneau émetteur-récepteur, qui est alors nécessairement du type $P_2$ n'est utilisé que comme maillon intermédiaire dans une chaîne de plusieurs panneaux transmettant de la chaleur d'un point A à un point B. Un tel panneau reçoit du rayonnement sur l'une de ses faces, l'absorbe, le transforme en chaleur puis réémet une grande partie de ce rayonnement par son autre face vers le panneau suivant. Ce processus peut se répéter un certain nombre de fois jusqu'à ce que, en fin de compte, on ait affaire à une panneau dont la deuxième face est en contact avec un fluide caloporteur capable d'évacuer les calories ainsi transmises pour leur utilisation à des fins industrielles.

A titre d'exemple, on peut citer un certain nombre d'applications du panneau, objet de l'invention, qui montreront, par leur diversité, la généralité d'emploi de ce dispositif.

Une application très intéressante réside par exemple dans l'utilisation d'un panneau comme capteur d'énergie solaire; à cet effet, on utilise en général un seul panneau en contact par sa deuxième face avec un fluide caloporteur en récupérant des calories.

Une autre application également intéressante consiste à refroidir un appareil chauffant placé dans l'air ou dans le vide.

Dans une installation domestique, on peut, à l'aide du panneau émetteur-récepteur, objet de l'invention, capter une partie importante de la chaleur d'une cheminée ou d'un foyer et l'utiliser pour chauffer un fluide caloporteur qui permet de rediffuser la chaleur ainsi recueillie, et qui autrement aurait été perdue dans une pièce même de grande dimension par rapport à celles de la cheminée.

On peut également envisager, avec le panneau objet de l'invention, d'extraire et de transmettre à grande distance (plusieurs mètres) la chaleur produite par un foyer ou une machine thermique pour la transférer à un fluide caloporteur et en particulier à un gaz sous pression relié en circuit fermé à une turbine actionnant un générateur électrique.

Enfin, par suite de la simplicité des formes géométriques élémentaires utilisées, le panneau objet de l'invention, offre, par rapport aux diverses solutions proposées antérieurement, l'avantage très important d'une possibilité de réalisation mécanique par des procédés industriels éprouvés tels que l'emboutissage.

De toute façon les caractéristiques et avantages de l'invention ressortiront mieux de la description qui suit donnée à titre explicatif et non limitatif, de plusieurs exemples de mise en oeuvre du panneau émetteur-récepteur, description qui sera faite en référence aux dessins annexés sur lesquels:

La figure 1 représente une vue en perspective d'un panneau émetteur-récepteur selon l'invention du type $P_1$, c'est-à-dire recouvert sur une surface seulement d'une structure absorbante de tubes cylindriques et de cônes;

La figure 2 représente une vue agrandie d'un élément constituant la structure absorbante du panneau de la figure 1;

La figure 3 représente un panneau émetteur-récepteur selon l'invention du type $P_2$, c'est-à-dire possédant une surface absorbante sur chacune de ses deux faces;

La figure 4 représente une variante de mise en oeuvre d'un panneau émetteur-récepteur du type $P_2$;

La figure 5 représente une autre variante d'un panneau émetteur-récepteur du type $P_2$;

La figure 6 représente une autre variante d'un panneau émetteur-récepteur du type $P_2$.

La figure 7 représente un mode de mise en oeuvre des panneaux émetteur-récepteur objet de l'invention utilisant un panneau du type $P_2$ plan concave;

La figure 8 représente un mode de mise en oeuvre de panneau émetteur-récepteur selon la présente invention utilisant un panneau de type $P_2$ convexe à l'entrée et concave à la sortie;

La figure 9 représente un dispositif de panneau émetteur-récepteur monté dans une structure parallélépipédique d'absorption de la chaleur dans laquelle circule un fluide caloporteur;

Les figures 10a, 10b et 11 montrent l'utilisation de panneaux du type P₁ et P₂ pour la récupération de la chaleur dégagée par un appareil de physique utilisé pour condenser un faisceau d'ions lourds chargé positivement;

La figure 12 représente l'utilisation de panneaux du type P₁ pour récupérer la chaleur irradiée par le foyer d'une cheminée;

La figure 13 représente également une combinaison de plusieurs panneaux du type P₁ permettant la récupération par un fluide calorifique de la chaleur rayonnée par un foyer de cheminée.

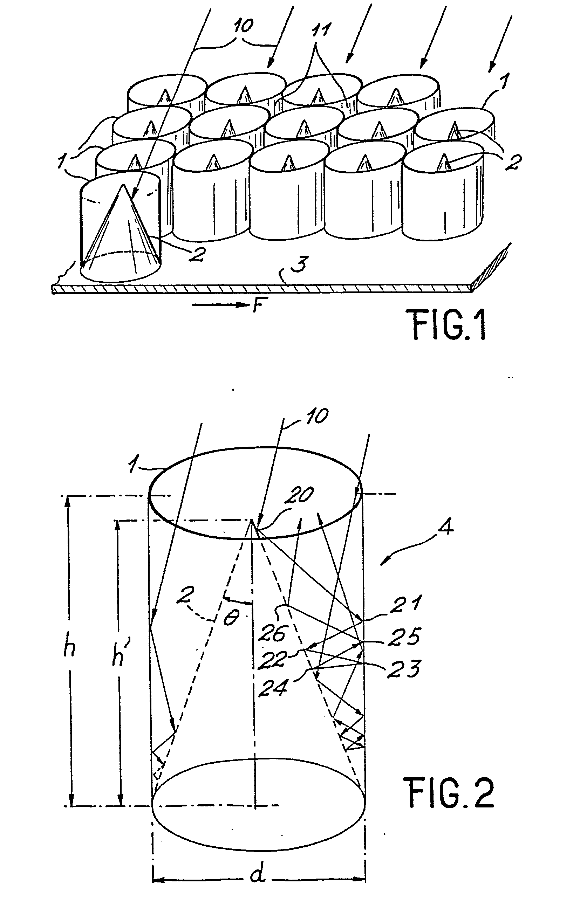

Sur la figure 1, on a représenté une vue en perspective de la structure de tubes métalliques cylindriques tels que 1 et de cônes métalliques tels que 2, formée sur la plaque métallique support 3 d'un panneau émetteur-récepteur du type P₁ selon la présente invention. Dans le cas du mode de réalisation représenté sur la figure 1, les tubes metalliques cylindriques droits 1 sont des cylindres à base circulaire. A l'intérieur de chacun de ces cylindres droits 1 à base circulaire, on trouve un cône tel que 2 ayant pour base l'intersection du cylindre 1 avec la plaque plane 3. Les cylindres 1, à l'intérieur desquels on trouve un cône 2 sont disposés sur la plaque métallique 3 selon un réseau régulier et sont contigus dans cet exemple.

La surface externe de chacun des cônes 2 coopère avec la surface interne du cylindre 1 à l'intérieur duquel il se trouve. En effet, la structure absorbante de cônes et de cylindres représentée sur la figure 1 reçoit un rayonnement électromagnétique, par exemple le rayonnement solaire 10. Chacun de ces rayons 10 rencontre la surface externe d'un cône 2, ou encore la surface interne d'un tube cylindrique 1. Il subit alors un grand nombre de réflexions à l'intérieur de ces structures, ce qui permet d'absorber ainsi la quasi-totalité de son énergie. Il se peut encore qu'un rayon tel que 10 atteigne ladit structure dans une zone délimitée par la surface externe de quatre tubes cylindriques tels que 1 adjacents. Dans ce cas, il n'est pas piégé par la coopération des surfaces du cône et du cylindre. Cependant, il subit malgré tout un certain nombre de réflexions et abandonne une partie de son énergie lors de ces réflexions. De toute manière, l'espace 11 compris entre plusieurs tubes cylindriques tels que 1 est faible, et en tout cas inférieur au quart de la surface totale.

La figure 2 représente une vue agrandie de l'un des éléments 4 constituant la structure de tubes cylindriques droits à base circulaire 1, et de cônes droits 2 représentée sur la figure 1. La figure 2 permet de comprendre la manière dont un rayon 10 rencontrant la surface interne d'un élément 4 est piégé. Ce rayon 10 frappe la surface du cône 2 et subit une première réflexion en 20. Il frappe alors la surface interne du tube cylindrique 1 en 21, où il subit une deuxième réflexion. Le rayon 10 est ensuite réfléchi successivement contre les surfaces du cône 2 et du cylindre 1 respectivement en 22, 23, 24, 25 et 26 avant de ressortir de l'élément 4. Ainsi, le rayon 10 considéré a été réfléchi sept fois par la surface interne dudit élément 4. Au cours de chacune de ses réflexions, il a abandonné une fraction de l'énergie qu'il possédait à l'élément 4 qui est réalisé en un matériau métallique de préférence bon conducteur de la chaleur tel que, par exemple, le cuivre, l'aluminium ou encore le laiton. Toutefois, les panneaux qui sont destinés à l'utilisation à haute température, sont réalisés en métaux ou alliages en général moins bon conducteur de la chaleur mais plus ou moins réfractaires, comme l'acier, l'acier inox et le tantale. Ainsi, après avoir subi l'ensemble de ces réflexions, la rayon 10 a abandonné la quasi-totalité de son énergie audit élément 4. En effet, si on désigne par la lettre a le coefficient d'absorption des surfaces métalliques du cylindre 1 et du cône 2 ce coefficient a étant relativement faible étant donné que lesdites surfaces ne sont revêtues d'aucune couche de peinture noire ou sélective destinée à augmenter, la fraction de l'énergie totale non cédée à un élément 4 par un rayon rencontrant la surface interne de l'élément 4 est donnée par la formule $E = (1 - a)^n$ dans laquelle n est le nombre de réflexions subies par le rayon 10 considéré à l'interieur dudit élément 4. Bien entendu, le nombre n de réflexions pour un rayon donné est variable et dépend de l'angle d'incidence de ce rayon. Ce nombre est minimum lorsque les rayonnements lumineux sont rigoureusement perpendiculaires à la surface de la plaque métallique plane 3 sur laquelle les éléments 4 sont fixés. Dans ce cas, le nombre de réflexions est au moins égal à cinq. Dans la plupart des cas, le nombre n des réflexions est supérieur à dix, et dans de nombreux cas, il peut nettement dépasser vingt. En prenant pour base du calcul un nombre n de réflexions égal en moyenne à dix, et si l'on adopte pour le coefficient d'absorption a la valeur de 0,2, ce qui est une hypothèse relativement défavorable, on aboutit à une absorption de l'ordre de 0,9. En réalité, on peut admettre que l'absorption est supérieure à 0,9 car a, a, au bout d'un certain temps, une valeur supérieure à 0,2, la surface absorbante des éléments 4 ne restant pas polie, même si elle l'était au début, et cela par suite d'exposition à l'atmosphère.

Le demi-angle au sommet $\theta$ du cône n'est pas choisi de manière quelconque. En effet, le nombre moyen de réflexions dépend de la valeur de cet angle. Le nombre moyen de réflexions augmente lorsque l'angle $\theta$ diminue. D'autre part, la hauteur h' du cône 2 est choisie de manière telle qu'il ne puisse recevoir de rayons perpendiculaires à ses génératrices, de manière à éviter une réflexion simple. Si l'on désigne par h la hauteur du cylindre 1 et par d son diamètre, il suffit pour que la condition précédente soit remplie que h − h' soit supérieur à

$$\frac{d}{2}\, \mathrm{tg}\, \theta$$

On adopte par exemple une valeur pour $\theta$ égale à 20 degrès, ce qui donne h' = 1,375 d. Dans ces conditions, le coefficient d'absorption de la structure représentée sur la figure 1 est élevé quel que soit l'angle d'incidence du rayonnement électromagnétique 10, et dès que cet angle d'incidence dépasse 10 degrés par rapport à la normale à la plaque métallique plane 3, l'énergie des rayons lumineux est pratiquement absorbée en totalité.

A titre d'exemple, on a réalisé une structure de cônes et de cylindres pour laquelle le diamètre des cylindres est de 5 mm et leur hauteur de 10 mm. La hauteur h' des cônes est égale à 6,9 mm.

Le panneau émetteur-récepteur de type $P_1$ représenté sur la figure 1 ne comprend qu'une surface absorbante (tubes 1 et cônes 2) située au-dessus de la plaque métallique support 3. La partie inférieure de cette plaque 3 reste lisse et on peut la mettre en contact avec un fluide caloporteur s'écoulant dans le sens de la flèche F pour évacuer les calories piégées par la surface absorbante et transmises par la plaque 3.

Sur la figure 3, on a représenté un panneau émetteur-récepteur selon l'invention du type $P_2$, c'est-à-dire dans lequel la plaque métallique de base 3 comporte sur sa face supérieure une structure absorbante 30 et sur sa face inférieure une structure émettrice 31 rigoureusement symétrique l'une de l'autre et composées comme dans l'exemple de la figure 1, de tubes métalliques cylindriques 1 et de cônes 2 situés à l'intérieur des tubes métalliques précédents. Si l'on suppose que la surface absorbante 30 reçoit de l'énergie de rayonnement 10 elle l'absorbe puis la transforme en chaleur selon le procédé déjà vu à propos de l'exemple de la figure 1. Cette chaleur est ensuite transmise, par conduction, à travers les parois des tubes cylindriques et des cones et à travers la plaque métallique support 3 à la structure émettrice 31. A cet effet, les deux structures 30 et 31 et la plaque 3 sont réalisées de préférence en un matériau bon conducteur de la chaleur tel que par exemple l'aluminium, le cuivre, le laiton ou leurs alliages; la chaleur ainsi transmise au travers de la plaque 3 à la structure émettrice 31 est à nouveau transformée en un rayonnement électromagnétique réémis par la surface absorbante 31.

On peut utiliser la structure de la figure 3 de deux façons différentes. Elle peut d'abord servir de maillon intermédiaire pour transmettre le rayonnement reçu 10 le transformer en rayonnement réémis 32 vers un autre panneau émetteur-récepteur du type $P_1$ ou du type $P_2$. Ceci peut intervenir soit au travers du vide soit même au travers de quelques mètres d'air sans absorption notable. Elle peut également être utilisée seule. Dans ce cas, la partie inférieure de la plaque métallique support 3 est léchée par un fluide caloporteur non représenté chargé d'évacuer les calories qui lui sont transmises. Cette transmission de la chaleur a lieu à la fois:

a) par conduction par les différentes structures métalliques qu'il baigne;

b) par convection, puisque ces structures contrarient l'écoulement du fluide caloporteur, ainsi que;

c) par rayonnement si le fluide caloporteur est, de plus, d'une nature telle qu'il ait un coefficient d'absorption des rayonnements relativement élevé.

L'épaisseur e de la plaque métallique 3 peut varier notablement, par exemple entre 2 mm et quelques centimètres et même plus lorsque cela est nécessaire pour des raisons de sécurité: on peut utiliser en effet un panneau de type $P_2$ pour former par exemple un hublot ou un couvercle d'appareil dans lequel on fait le vide ou qui est soumis à une forte pression.

La figure 4 est relative à une variante du panneau émetteur-récepteur de type $P_2$ objet de invention dans laquelle les cylindres 1 ne sont plus jointifs mais espacés les uns des autres. Dans ce mode de mise an oeuvre, la plaque métallique support 3 est discontinue et comporte un certain nombre d'orifices la traversant de part en part selon un réseau régulier. Dans chacun de ces orifices 33 est serré à force un ensemble composé d'une cylindre 1 comportant en son milieu deux cônes 2 et 2a accolés par leur base et dont les sommets sont situés en des directions opposées de chaque côté de la plaque 3.

La figure 5 représente une variante du mode de mise en oeuvre de la figure 4, utilisée notamment lorsque l'on veut faire passer de la chaleur rayonnante à travers un mur (cas de l'évacuation de la chaleur produite par une chaudière par exemple). Dans ce mode de mise en oeuvre, le mur 34 est également percé d'orifices 33 non jointifs. Chaque orifice 33 est comblé par une pièce métallique 35 ayant la forme d'un cylindre droit prolongé à ses deux extrémités par deux cônes 2 et 2a dont les sommets sont en des directions opposées. Chaque ensemble constitué d'une pièce métallique pleine précédente est enserré dans un tube cylindrique 1 qui traverse la paroi de part en part. Le réseau des orifices 33 dans le mur 34 est de préférence un réseau régulier et la longueur de la partie cylindrique 35 de la pièce métallique pleine est égale à l'épaisseur du mur. Si le mur est, comme c'est le plus souvent le cas, en un matériau isolant tel que le béton par exemple, c'est l'ensemble des éléments cylindriques 35 qui constitue l'équivalent de la plaque métallique support 3 discontinu du panneau de type $P_2$ ainsi réalisé. Il y a lieu de remarquer que, si le mur 34 a une certaine épaisseur, par exemple de l'ordre de 20 cm, le rayon des cylindres 35 peut être suffisamment grand pour que le nombre d'éléments métalliques traversant ce mur par mètre carré soit relativement faible.

Ceci est un avantage si l'on tient compte du fait que la construction d'un tel dispositif ne peut pas être envisagée par un procédé automatique (tel que l'emboutissage) comme c'est le cas pour les autres types de panneaux émetteur-récepteur $P_1$ ou $P_2$.

La figure 6 représente enfin un type particulier de panneau émetteur-récepteur du type $P_2$ selon l'invention dans lequel, de part et d'autre de la plaque 3, les mailles du réseau constituant les cylindres 1 sont différentes. Dans l'exemple représenté, qui n'est donné bien entendu qu'à titre illustratif, la surface absorbante inférieure par rapport à la plaque 3 est équipée de cylindres la et de cônes 2a dont les dimensions linéaires sont moitié de celles de cylindres 1 et des cônes 2 de la surface absorbante de la partie supérieure.

La figure 7 montre une installation possible de transfert de chaleur à distance à l'aide d'une panneau $P_2$ 36 plan concave associé à une certaine distance avec un panneau $P_1$ 37 balayé par un fluide caloporteur sur sa face arrière selon la flèche 38. Le panneau 36 reçoit le rayonnement $R_1$ sur sa face d'entrée plane et retransmet celui-ci selon le faisceau $R_2$ convergent en un foyer virtuel $F_1$. Le panneau 37 de type $P_1$ recueille l'énergie du faisceau $R_2$ et le cède au fluide caloporteur 38.

Si le panneau 36 a 40 cm de diamètre, et un rayon de courbure de 5 m sur sa face émettrice concave, l'épaisseur de métal enlevée au centre du panneau 36 est de 4 mm. Les éléments absorbants ne sont plus alors complètement jointifs et l'on calcule leur distance mutuelle de façon que, en fonction de la hauteur des cylindres, ils soient pratiquement au contact les uns des autres à leurs extrémités extérieures. Le panneau 36 a par exemple 10 mm d'épaisseur de manière à ce que sa conduction soit suffisamment bonne pour égaliser la température des deux faces. Avec un tel panneau plan concave il est possible, étant donné la transparence de l'air pur à l'infrarouge, de concentrer de la chaleur sur un diamètre de l'ordre de 20 cm à une distance de l'ordre de 3 m.

Le dispositif de la figure 8 est une variante du dispositif de la figure 7 dans lequel le panneau 39 de type $P_2$ est convexe sur sa face d'entrée 40 et concave sur sa face de sortie 41. Il en résulte que le système est capable de recevoir un rayonnement calorifique $R_3$ plus dispersé que le rayonnement $R_1$ de la figure 7, le reste de l'installation fonctionnant de façon identique.

De préférence, les panneaux doivent être bons conducteurs. Dans la mesure du possible, on utilise des panneaux homogènes, c'est-à-dire constitués de la même matière, et si possible bonne conductrice de la chaleur: aluminium pour les faibles températures, cuivre pour les températures moyennes, et un acier bon conducteur de la chaleur, et fondant par exemple à 1515°C pour les températures plus élevées.

Dans le cas où l'on ne peut pas faire autrementet c'est en principe le case des appareils à vide- on utilise de l'acier inox, par exemple le type 304 dont la température de fusion est de 1427°C et dont la conduction thermique relativement faible a, en contrepartie, l'avantage de ne pas transmettre beaucoup de chaleur au reste de l'appareil par conduction. Les épaisseurs des fonds de panneaux, c'est-à-dire des plaques dans lesquelles on a fait le logement des éléments cylindroconiques sont très variables; elles sont de l'ordre de 2 mm pour certains panneaux jusqu'à 30 à 40 mm pour des hublots thermiques protégeant le vide d'un appareil, ou pour des éléments d'une chaudière sous pression.

Sur la figure 9 on a représenté un dispositif d'absorption évacuation de l'énergie rayonnée à l'aide d'un conduit 42 de forme parallélépipédique parcouru par un fluide caloporteur dans le sens de la flèche $F_3$. Un tel conduit 42 est revêtu extérieurement sur sa face 43 recevant le rayonnement à capteur par un panneau récepteur de type $P_1$ conforme à l'invention. Le caisson 42 est constitué par exemple par un tube rectangulaire en aluminium, en laiton, en inox ou même en acier. Le panneau $P_1$ situé à la partie supérieure sur la face 43, et dont quelques éléments cylindriques seulement one été représentés en 44, est fortement pressé contre la face supérieure 43 du tube rectangulaire. Le panneau $P_1$ très mince est obtenu très simplement par emboutissage. Il reçoit le rayonnement que le dispositif est chargé de capter. L'installation de la figure 9 trouve une application particulièrement intéressante pour la captation du rayonnement solaire auquel cas le fluide caloporteur $F_3$ utilisé est par exemple un gaz sous pression puisque l'on peut, avec des alliages d'aluminium pour le tube 42 supporter une pression de l'ordre de 33 kg/cm² ou même de 50 kg si l'on utilise des tubes d'inox. Une pression de cet ordre de grandeur permet une évacuation très satisfaisante des calories. On peut noter par ailleurs qu'il est possible d'augmenter encore le taux d'échange thermique entre le fluide caloporteur et le tube 42 en augmentant la convection à l'intérieur de celui-ci. A cet effet, on peut par exemple garnir la face interne du tube 42 à l'aide de bandes métalliques du type $P_1$ comportant des éléments de très petites dimensions. L'augmentation de la convection ainsi obtenue permet d'élever plus facilement la température des parties du type 42 qui ne se trouvent pas au soleil et d'augmenter ainsi les échanges de chaleur.

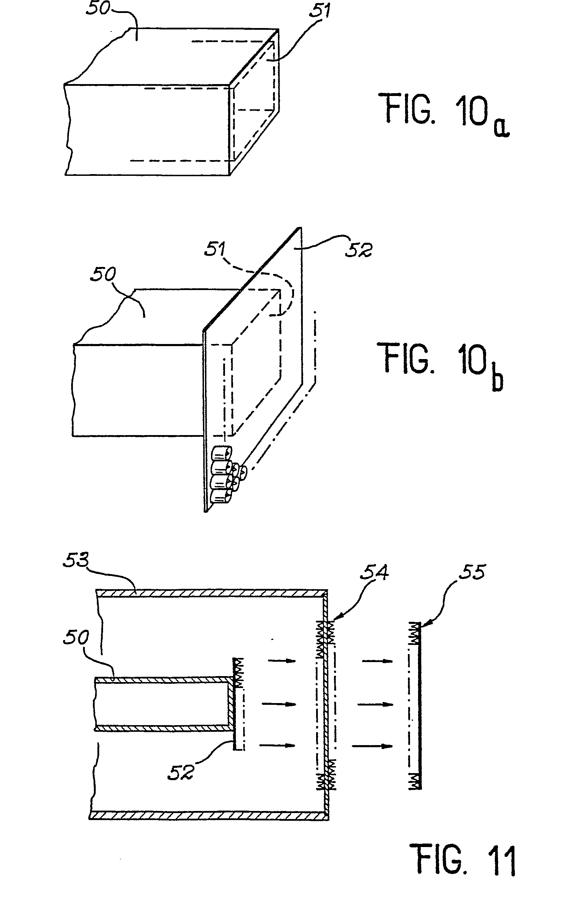

Les figures 10a, 10b et 11 permettent de comprendre le fonctionnement d'une installation qui, à l'aide de trois panneaux de type $P_1$ et $P_2$ associés, permet de refroidir un appareil disposé dans le vide et de recupérer la chaleur ainsi prélevée.

Sur la figure 10a on a représenté partiellement un appareil utilisé pour condenser un faisceau d'ions lourds chargé positivement. Cet appareil schématisé par un parallélépipède 50 est terminé par un fond 51 sur lequel sont condensées des particules et où a lieu le dégagement de chaleur principal. L'appareil ainsi décrit est constitué extérieurement par un tube de section rectangulaire en acier inox mince de 2 à 3 mm d'épaisseur par exemple. Le tube 50 a par exemple 60 cm de long et un fond 51 de 40 cm sur 50 cm. Si les particules reçues intérieurement au tube 50 sur la face 51 ont une énergie de 20 keV correspondent à un courant dont l'intensité est de l'ordre de 1 Ampère, la puissance totale due à la condensation des particules chargées, c'est-à-dire 20 KW, est localisée sur le fond 51 de l'appareil. En l'absence de tout panneau de refroidissement, et en admettant pour l'acier inoxydable un taux d'émissivité de l'ordre de 0,1, la température ainsi atteinte par le fond de l'appareil 51 est de l'ordre de 1630°K pour une surface émettrice voisine de 0,50 m².

On peut évacuer la majeure partie de la chaleur ainsi développée en disposant sur la surface 51 un panneau 52 conforme à l'invention et de type $P_1$ ayant pour dimensions 80 cm de large et 70 cm de haut, c'est-à-dire débordant de 15 cm de chaque côté du fond 51 de l'appareil. Des masses de cuivre additionnelles en contact avec le tube 50 et le panneau de type $P_1$ 52, peuvent augmenter encore le flux de chaleur transmis par le tube 50 audit panneau 52.

Quoi qu'il en soit, lorsque l'équilibre est atteint, on peut admettre que la puissance de 20 KW est rayonnée par le panneau 52 dont le coefficient d'émission est très voisin de l'unité, comme l'ont montré les expériences faites. Dans ces conditions, le panneau rayonne 20 KW sur une surface de 0,56 m², soit 35,7 KW/m², ce qui correspond, dans le cas du corps noir, à une température de 891°K compatible avec la condensation des ions lourds.

Tout le dispositif est disposé dans une enceinte cylindrique en inox 53, ayant 1,20 m de diamètre, dans laquelle règne un vide de l'ordre de 5.10⁻⁶ torr; l'énergie rayonnée par le panneau $P_1$ 52 est reçue par un panneau 54 de type $P_2$ inserré dans le fond de l'enceinte 53, ou pouvant constituer le fond de cette enceinte 53. La plaque support du panneau 54 est un cylindre en inox, d'épaisseur 30 à 40 mm et de diamètre égal à 0,90 m. La surface de ce panneau double est égale à 0,64 m².

On peut admettre, étant donné la répartition énergétique de la puissance émise par le panneau 52 de type $P_1$ que 19 KW atteignent le panneau 54 de type $P_2$ qui est situé à une distance comprise entre 40 et 60 cm du panneau 52. Si l'on admet une perte de 12% pour l'énergie rayonnée par la face intérieure de panneau 54, sa face extérieure rayonne donc, lorsque la température est en équilibre, 19 KW × 0,88 soit environ 26,1 KW/m²; sa température est donc de l'ordre de 824°K. L'énergie restante (16 KW) est transmise alors à un panneau 55 de type $P_1$ ou de type $P_2$, pour être extraite par un fluide caloporteur non représenté et utilisée. Ce panneau 55 est carré et a 1 m de côté; il peut être situé entre 30 et 100 cm de l'extérieur du panneau 54 (figure 11). Dans ces conditions, on peut admettre encore que 95% de l'énergie arrive sur la surface d'entrée du panneau 55, soit environ 15,2 KW. Par suite des corrections (cela dépend de la distance), environ 86 à 92 % sont disponibles sur la face de sortie du panneau 55 quand il y a équilibre; si l'on admet une valeur moyenne de 88% comme précédemment, ce sont environ 13 KW qui peuvent être transmis au fluide caloporteur. Dans ces conditions cette puissance correspond à une température de la face de sortie du panneau 55 de 704°K, soit 431°C; elle sera donc transmise en principe à un gaz sous pression. En effet, le fluide caloporteur ne peut être de l'eau, car la température est trop élevée, mais un gaz tel que l'hélium ou l'argon. Le dispositif avec le dernier panneau 55 constitue la source chaude d'une cycle fermé de turbine à gaz, ce qui permet de transformer avec un bon rendement l'énergie calorifique en énergie électrique, et récupérer un fraction relativement importante de l'énergie électrique consommée pour accélérer le faisceau d'ions.

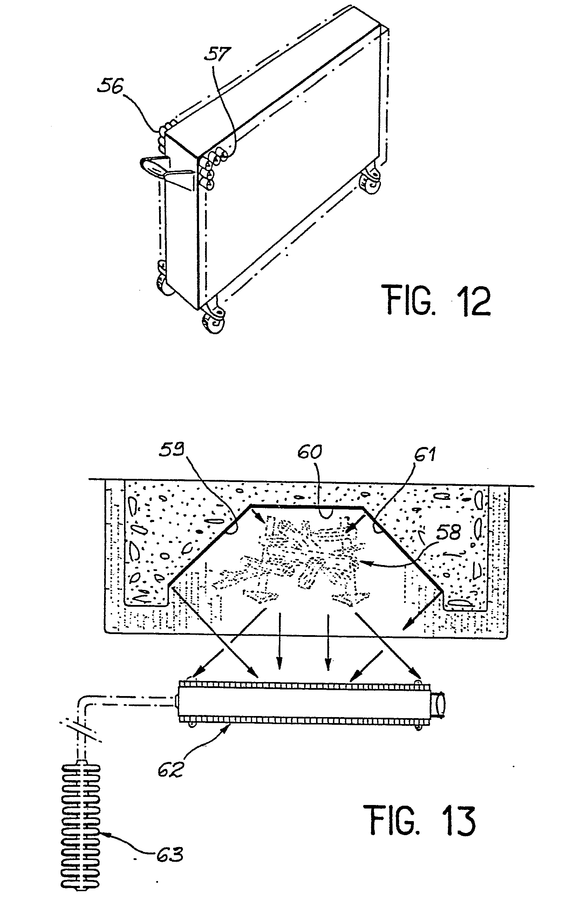

En se référant maintenant aux figures 12 et 13 on va décrire une application possible du panneau émetteur-récepteur selon l'invention à la récupération de la quantité de chaleur fournie par le foyer d'une cheminée de type domestique.

Dans une cheminée, la température de la flamme mesurée au pyromètre optique oscille entre 1000 et 1100°C, la surface des flammes ayant des dimensions moyennes de l'ordre de 50 cm de hauteur et 15 cm de large. Pour absorber l'énergie thermique rayonnée par ce feu de cheminée, on a réalisé un radiateur tel que celui représenté sur la figure 12. Ce radiateur de forme parallèlèpipédique rectangle a 80 cm de hauteur, 100 cm de largeur et 15 cm d'épaisseur et il comporte deux panneaux émetteur-récepteur de type $P_1$, 56 et 57 sur ses deux faces opposées. L'espace intérieur compris entre les panneaux 56 et 57 est rempli d'eau ordinaire. L'ensemble est mobile et monté à cet effet sur roulettes 64 permettant son déplacement. La masse d'eau est suffisante pour que la capacité calorifique de l'ensemble permette le chauffage de la pièce entière pendant un long moment.

En effet, si l'on absorbe 1 KW et que la masse d'eau soit de l'ordre de 100 litres, il faut environ 7 heures pour élever la température de 60°C.

Dans un autre mode de mise en oeuvre représenté sur la figure 13 où l'on voit un foyer de cheminée 58 en coupe vu de dessus, on utilise plusieurs panneaux de type $P_1$ 59, 60 et 61 pour constituer derrière le foyer une sorte de paravent qui absorbe et renvoie l'énergie calorifique produite. Le radiateur principal 62, équipé comme celui de la figure 12 précédente, de deux panneaux émetteur-récepteur du type $P_1$ est situé devant le foyer et il reçoit l'énergie calorifique d'une part directement des flammes du foyer et d'autre part par réémission à partir des panneaux 59, 60 et 61. Si le rayonnement reçu est trop important, on peut faire appel à un radiateur secondaire 63 relié au radiateur principal 62.

## Revendications

1. Panneau émetteur-récepteur à haut rendement d'énergie rayonnée du genre de ceux qui comprennent de façon connue une plaque métallique support (3), conductrice de la chaleur, sur une face de laquelle se trouve une surface absorbante composée de tubes métalliques cylindriques droits à base circulaire (1), d'axes perpendiculaires à la surface de la plaque (3), disposés selon un réseau régulier, caractérisé en ce que, à l'intérieur de chacun des tubes cylindriques droits (1) se trouve disposé un cône métallique droit (2) ayant pour base l'intersection du tube cylindrique (1) avec la plaque support (3) et pour sommet un point situé à l'intérieur du tube cylindrique droit (1), sur l'axe de ce tube (1), le demi-angle au sommet $\theta$ de chaque cône (2) satisfaisant l'expression $h - h' > d/2\ \mathrm{tg}\ \theta$, expression dans laquelle h est la hauteur de chacun des tubes cylindriques droits (1), h' est la hauteur de chacun des cônes (2) et d le diamètre de chacun des tubes cylindriques droits (1).

2. Panneau émetteur-récepteur selon la revendication 1, caractérisé en ce que les tubes métalliques cylindriques (1) sont jointifs sur toute la surface de la plaque métallique support (3).

3. Panneau émetteur-récepteur selon la revendication 1, caractérisé en ce que la plaque métallique support est plane et d'épaisseur constante.

4. Panneau émetteur-récepteur selon la revendication 1, caractérisé en ce que la plaque métallique support (3), a une épaisseur variable de façon que l'une de ses faces absorbantes au moins ait un profil légèrement convexe ou concave.

5. Panneau émetteur-récepteur selon la revendication 1, caractérisé en ce que les deux faces du panneau sont équipées chacune d'une surface absorbante dont les tubes métalliques cylindriques droits sont disposés selon un réseau régulier de pas différent.

6. Panneau émetteur-récepteur selon la revendication 1, caractérisé en ce que la plaque métallique support (3) est percée d'orifices (33), le panneau à double surface absorbante étant alors constitué de tubes cylindriques (1), équipés chacun en son milieu de deux cônes (2, 2a) accolés par leur base commune, et traversant de part en part la plaque support (3) dans les orifices (33) de laquelle ils sont insérés selon un réseau régulier.

7. Panneau émetteur-récepteur selon la revendication 1, caractérisé en ce que la plaque métallique support (3) est percée d'orifices (33), le panneau à double surface absorbante étant alors constitué de tubes cylindriques (1) équipés chacun en son milieu d'une pièce métallique pleine (35) ayant la forme d'un cylindre droit prolongé à ses deux extrémités par deux cones (2, 2a) dont les sommets sont en des directions opposées, lesdits tubes cylindriques (1) traversant de part en part la plaque support (3) dans les orifices (33) de laquelle ils sont insérés selon un réseau régulier.

8. Panneau émetteur-récepteur selon l'une quelconque des revendications 1 à 7, caractérisé en ce que la plaque métallique plane (3), les tubes métalliques cylindriques droits (1), et les cônes métalliques droits (2, 2a) sont réalisés en un matériau conducteur de la chaleur.

9. Panneau émetteur-récepteur selon la revendication 8, caractérisé en ce que le matériau conducteur de la chaleur dans lequel la plaque métallique plane (3), les tubes métalliques cylindriques droits (1) et les cônes métalliques (2) sont réalisés, est choisi dans le groupe comprenant le cuivre, l'aluminium, le laiton et leurs alliages et l'acier inox.

10. Procédé d'utilisation d'un panneau émetteur-récepteur selon l'une quelconque des revendications 1 à 9, caractérisé en ce que ledit panneau transmet directement par l'une de ses faces en contact avec un fluide caloporteur l'énergie radiante reçue par l'autre de ses faces.

11. Procédé d'utilisation d'un panneau émetteur-récepteur selon l'une quelconque des revendications 1 à 9, caractérisé en ce que ledit panneau sert d'intermédiaire de transmission de chaleur en réémettant par l'une de ses faces vers un autre panneau l'énergie de rayonnement reçue par l'autre face.

## Patentansprüche

1. Strahler-Absorbertafel mit hoher Ausbeute an Strahlungsenergie, von der an sich bekannten Art mit einer einen Wärmeleiter darstellenden, metallenen Tragplatte (3), welche an einer Seite eine absorbierende Oberfläche aufweist, welche aus in einem gleichmäßigen Muster mit ihren Achsen lotrecht zur Oberfläche der Platte (3) angeordneten, geradlinig kreiszylindrischen metallenen Rohren (1) gebildete ist, dadurch gekennzeichnet, daß im Inneren jedes der geradlinig kreiszylindrischen Rohre (1) eine geradliniger metallener Kegel (2) angeordnet ist, dessen Basis durch die Schnittstelle des zylindrischen Rohrs (1) mit der Tragplatte (3) gebildet ist und dessen Spitze an einem innerhalb des geradlinig zylindrischen Rohrs (1) auf der Achse des Rohrs (1) liegenden Punkt gelegen ist, wobei der Halbwinkel $\theta$ der Spitze jedes Kegels (2) dem Ausdruck $h - h' > d/2\ \mathrm{tg}\ \theta$ genügt, worin h die Höhe jedes geradlinig zylindrischen Rohrs (1), h' die Höhe jedes Kegels (2) und d der Durchmesser jedes der geradlinig zylindrischen Rohre (1) ist.

2. Strahler-Absorbertafel nach Anspruch 1, dadurch gekennzeichnet, daß die cylindrischen metallenen Rohre (1) in gegenseitiger Berührung über die gesamte Oberfläche der metallenen Tragplatte (3) angeordnet sind.

3. Strahler-Absorbertafel nach Anspruch 1, dadurch gekennzeichnet, daß die metallene Tragplatte eben und von konstanter Stärke ist.

4. Strahler-Absorbertafel nach Anspruch 1, dadurch gekennzeichnet, daß die metallene Tragplatte (3) eine variable Stärke aufweist, derart, daß wenigstensseine ihrer Absorptions-Oberflächen ein elicht konvexes oder konkaves Profil hat.

5. Strahler-Absorbertafel nach Anspruch 1, dadurch gekennzeichnet, daß die Platte an beiden Seiten jeweils mit einer absorbierenden Oberfläche versehen ist, deren geradlinig cylindrische metallene Rohre jeweils in einem gleichförmigen Muster verschiedener Teilung angeordnet sind.

6. Strahler-Absorbertafel nach Anspruch 1, dadurch gekennzeichnet, daß die metallene Tragplatte (3) von Öffnungen (33) durchsetzt ist, und daß die mit zwei absorbierenden Oberflächen versehene Tafel dann aus zylindrischen Rohren (1) gebildet ist, welche in einem gleichmäßigen Muster in die Öffnungen (33) der Tragplatte (3) eingesetzt sind, so daß sie beiderseits hervorstehen, und jeweils zwei entlang ihrer gemeinsamen Basis darin befestigte Kegel (2, 2a) enthalten.

7. Strahler-Absorbertafel nach Anspruch 1, dadurch gekennzeichnet, daß die metallene Tragplatte (3) von Öffnungen (33) durchsetzt ist, und daß die mit zwei absorbierenden Oberflächen versehene Tafel dann aus zylindrischen Rohren (1) gebildet ist, welche in einem gleichmäßigen Muster in die Öffnungen (33) der Tragplatte (3) eingesetzt sind, so daß sie beiderseits hervorstehen, und in ihrer Mitte jeweils ein massives Metallstück (35) von geradlinig zylindrischer Form enthalten, welches an seinen beiden Enden durch zwei mit ihren Spitzen in entgegengesetzte Richtungen weisende Kegel (2, 2a) verlängert ist.

8. Strahler-Absorbertafel nach einem der Ansprüche 1 bis 7, dadurch gekennzeichnet, daß die ebene metallene Platte (3), die geradlinig zylindrischen metallenen Rohre und die geradlinigen metallenen Kegel (2, 2a) aus einem wärmeleitenden Werkstoff gefertigt sind.

9. Strahler-Absorbertafel nach Anspruch 8, dadurch gekennzeichnet, daß der wärmeleitende Werkstoff, aus welchem die ebene metallene Platte (3), die geradlinig zylindrischen metallenen Rohre (1) und die metallenen Kegel (2) gefertigt sind, aus der Kupfer, Aluminium, Messing und Legierungen davon sowie rostfreien Stahl umfassenden Gruppe gewählt ist.

10. Verfahren für die Verwendung einer Strahler-Absorbertafel nach einem der Ansprüche 1 bis 9, dadurch gekennzeichnet, daß die Tafel die von einer ihrer Oberflächen empfangene Strahlungsenergie direkt über die mit einem Wärmeträger-Strömungsmittel in Kontakt stehende andere Oberfläche abgibt.

11. Verfahren für die Verwendung einer Strahler-Absorbertafel nach einem der Ansprüche 1 bis 9, dadurch gekennzeichnet, daß die Tafel als Wärme-Zwischenübertrager dient, indem sie die von einer ihrer Oberflächen empfangene Strahlungsenergie über ihre andere Oberfläche auf eine andere Tafel abstrahlt.

**Claims**

1. High efficiency emission-absorption panel for radiant energy of the type which comprises in known manner a heat conducting metallic support plate (3) having on one face an absorbing surface composed of right cylindrical metallic tubes, having circular bases (1) and axes perpendicular to the surface of the plate (3), disposed in a regular array, characterized in that within the interior of each of the metallic right cylinders (1) there is a metallic right cone (2) whose base is the intersection of the cylindrical tube (1) with the support plate (3) and whose apex is a point located in the interior of the right cylindrical tube (1) and on the axis of said tube (1), the half-angle $\theta$ of the apex of each cone (2) satisfying the relation $h - h' > d/2 \tan \theta$ wherein h is the height of each of the right cylindrical tubes (1), h' is the height of each of the cones (2), and d is the diameter of each of the right cylindrical tubes (1).

2. Emission-absorption panel according to claim 1 characterized in that the cylindrical metallic tubes (1) are distributed over the entire surface of the metallic support plate (3).

3. Emission-absorption panel according to claim 1 characterized in that the metallic support plate (3) is flat and has constant thickness.

4. Emission-absorption panel according to claim 1 characterized in that the metallic support plate (3) has a varying thickness whereby at least one of the absorbing surfaces has a slightly convex or concave profile.

5. Emission-absorption panel according to claim 1 characterized in that the two surfaces of the panel are each provided with an absorbing surface whose right cylindrical metallic tubes are disposed in a regular array, each array being of different pitch.

6. Emission-absorption panel according to claim 1 characterized in that the metallic support plate (3) is pierced by orifices (33), the panel having two absorbing surfaces thereby comprises cylindrical tubes (1), each having at its middle two cones (2, 2a) joined at their common base, and passing through the orifices (33) from side to side of the support plate (3), in a regular array.

7. Emission-absorption panel according to claim 1 characterized in that the metallic support plate (3) is pierced by orifices (33), the panel having two absorbing surfaces thereby comprising cylindrical tubes (1), each having at its middle a solid metallic member (35) having the form of a right cylinder prolonged at its two ends by respective cones (2, 2a) whose apices point in opposite directions, said cylindrical tubes (1) passing through the orifices (33) from side to side of the support plate (3) in a regular array.

8. Emission-absorption panel according to any one of claims 1 to 7 characterized in that the flat metallic plate (3), the right cylindrical metallic tubes (1), and the metallic right cones (2, 2a) are made from heat-conductive material.

9. Emission-absorption panel according to claim 8 characterized in that the heat-conductive material from which the flat metallic plate (3), the right cylindrical metallic tubes (1) and the metallic cones (2) are made is selected from the group comprising copper, aluminium, brass, alloys thereof, and stainless steel.

10. Process for the utilization of an emission-absorption panel according to any one of claims 1 to 9 characterized in that said panel directly transmits from one of its faces, in contact with a heat-transfer fluid, the radiant energy absorbed by the other of its faces.

11. Process for the utilization of an emission-absorption panel according to any one of claims 1 to 9 characterized in that said panel acts as an intermediate device for heat transfer, re-emitting from one of its surfaces towards another panel, the energy absorbed by its other surface.

FIG.1

FIG.2

FIG. 3

FIG. 4

FIG. 5

FIG. 6

FIG. 7

FIG. 8

FIG. 9

FIG. 10ₐ

FIG. 10_b

FIG. 11

5

0 018 900

FIG. 12

FIG. 13